# EUROPEAN PATENT APPLICATION

(11) **EP 4 714 674 A2**
(43) Date of publication of application: **25.03.2026**
(21) Application number: 25189150.3
(22) Date of filing: 11.07.2025
(51) Int. Cl.: B60C 9/20, B60C 9/22, B60C 9/30

(54) **TRUCK TIRE**

(30) Priority: 29.07.2024 US 202418786690
(71) Applicant: The Goodyear Tire & Rubber Company, Akron, OH 44316 (US)
(72) Inventor: MANOGARAN, Arun Prasath, L-7740 Colmar-Berg (LU); JOUBERT, Paul Benoit, L-2714 Luxembourg (LU); MULLER, Philippe Joseph Auguste, B-6971 Champlon (BE); KRIER, Roland Willibrord, L-6622 Wasserbillig (LU); ROSCA, Costel, L-7750 Colmar-Berg (LU)
(74) Representative: Kutsch, Bernd

(57) **Abstract**

A tire (1) is disclosed comprising a tread (20) and a belt portion (100) located radially below the tread (20). The tread (20) has two shoulder portions, each shoulder portion comprising a shoulder groove (21). The belt portion (100) comprises an intermediate belt (120) and a pair of working belts comprising a first working belt (110) and a second working belt (130) arranged radially above the first working belt (130). The intermediate belt (120) is arranged between the first working belt (110) and the second working belt (130) and has elongated reinforcement elements making an angle of less than 5° with a circumferential direction of the tire (1). The intermediate belt (120) comprises a first layer (121) and one or more further layers (122, 123). The first layer (121) of the intermediate belt (120) extends over at least 70% of the axial width of an axially largest working belt (110, 130) of the pair of working belts. Each layer of the one or more further layers (122, 123) of the intermediate belt (120) is arranged radially below one of the shoulder grooves (21) and extends over at most 50% of the axial width of the axially largest working belt (110, 130). The belt portion (100) further comprises a top belt (140) arranged radially above the second working belt (130). The top belt (140) comprises reinforcement cords having an impact energy absorption higher than 7 J/mm².

## Description

### Field of the Invention

The present invention is directed to a tire comprising a belt portion comprising an intermediate belt and a top belt. In particular, the tire can be a pneumatic tire, such as a pneumatic truck tire.

### Background of the Invention

Modern pneumatic truck tires are supposed to meet many different performance requirements such as low rolling resistance and/or high abrasion resistance. It is also desirable that such tires are robust. In particular, forces in the area of the grooves and/or shoulders of the tires shall be reduced. For instance, it is possible to reduce such forces by the provision of advanced tread constructions. While progress has been made in the development of robust tires, such as robust truck tires, over the past decades, significant room for improvement remains.

### Summary of the Invention

The invention relates to a tire in accordance with claim 1, 9 or 13 respectively.

Dependent claims refer to preferred embodiments of the invention.

In a first aspect of the present invention, the invention is directed to a tire comprising a tread and a belt portion located radially below the tread. The tread has two shoulder portions, wherein each shoulder portion comprises a shoulder groove, wherein the belt portion comprises a pair of working belts and an intermediate belt, and wherein the pair of working belts comprises a first working belt and a second working belt arranged radially above the first working belt. The intermediate belt is arranged between the first working belt and the second working belt and has elongated reinforcement elements having an angle of less than 5° with a circumferential direction of the tire, wherein the intermediate belt further comprises a first layer and one or more further layers. The first layer of the intermediate belt extends over at least 70% of the axial width of an axially largest working belt of the pair of working belts, wherein each layer of the one or more further layers of the intermediate belt is arranged radially below one of the shoulder grooves and extends over at most 50% of the axial width of the axially largest working belt. Furthermore, the belt portion further comprises a top belt, arranged radially above the second working belt, and which comprises reinforcement cords having an impact energy absorption higher than 7 J/mm².

In a second aspect of the present invention, the invention is directed to a tire comprising a tread and a belt portion located radially below the tread, wherein the tread has two shoulder portions, each shoulder portion comprising a shoulder groove, and wherein the belt portion comprises a pair of working belts and an intermediate belt. Furthermore, the pair of working belts comprises a first working belt and a second working belt radially above the first working belt, with the intermediate belt being arranged between the first working belt and the second working belt, and comprising metal cords having i) an angle of less than 5° with a circumferential direction of the tire and ii) a cord construction according to a + b x d, wherein a is ranging from 1 to 5, b is ranging from 2 to 7, and d is ranging from 0.2 mm to 0.5 mm. Moreover, the belt portion further comprises a top belt arranged radially above the second working belt, wherein the top belt comprises cords having an impact energy absorption larger than 7 J/mm².

In a third aspect of the present invention, the invention is directed to a tire comprising a tread and a belt portion located radially below the tread, wherein the tread has two shoulder portions, each shoulder portion comprising a shoulder groove, and wherein the belt portion comprises a pair of working belts as well as an intermediate belt. Furthermore, the pair of working belts comprises a first working belt and a second working belt arranged radially outward the first working belt, wherein the intermediate belt is arranged between the first working belt and the second working belt and comprises elongated reinforcement elements having an angle of less than 5° with a circumferential direction of the tire. Still in accordance with the third aspect, the intermediate belt has a rubber penetration of at least 90% along at least 90% of its axial width, and the belt portion further comprises a top belt, arranged radially above the second working belt, wherein the top belt comprises cords having an impact energy absorption larger than 7 J/mm².

### Brief Description of the Drawings

The invention will be described by way of example and with reference to the accompanying drawings in which:
FIG. 1 is a schematic cross-section of a tire in accordance with a first embodiment of the present invention;
FIG. 2 is a schematic cross-section of another tire in accordance with a second embodiment of the present invention;
FIG. 3 is a schematic cross-section of an alternative belt portion for one of the tires of Figure 1 and Figure 2;
FIG. 4 is another schematic cross-section of another alternative belt portion for one of the tires of Figure 1 and Figure 2; and
FIG. 5 is still another schematic cross-section of a third alternative belt portion for one of the tires shown in Figure 1 and Figure 2, wherein this alternative comprises a non-reinforced filler filling the space between two axially opposite layers of an intermediate belt.

### Detailed Description of Preferred Embodiments of the Invention

According to the first preferred aspect of the invention, the (preferably pneumatic) tire comprises a tread and a belt portion located radially below the tread. The tread has two shoulder portions, or axially opposite shoulder portions, wherein each shoulder portion comprises a shoulder groove (particularly, extending in a circumferential direction of the tire). The belt portion comprises a pair of working belts and an intermediate belt, wherein the pair of working belts comprises a first working belt and a second working belt arranged radially above the first working belt. The intermediate belt is arranged between the first working belt and the second working belt and has elongated reinforcement elements having an angle of less than 5° (preferably less than 2°, or less than 1°) with the circumferential direction of the tire, wherein the intermediate belt comprises a first layer and one or more further layers. The first layer of the intermediate belt extends over at least 70% (preferably, over at least 75% and/or over less than 95%) of the axial width of an axially largest working belt of the pair of working belts, and each layer of the one or more further layers of the intermediate belt is arranged radially below one of the shoulder grooves and extends over at most 50% (preferably, over at most 30%, and/or preferably over at least 5%) of the axial width of the axially largest working belt. Furthermore, the belt portion further comprises a top belt arranged radially above the second working belt, and which comprises reinforcement cords having an impact energy absorption higher than 7 J/mm², preferably higher than 7.5 J/mm².

The inventors have found that the combination of such an intermediate belt and top belt results in a particularly robust tire design. In particular, the combination of said intermediate belt and the top belt comprising the reinforcement cords with high impact energy absorption helps to provide a tire which is particularly durable in a circumferential centerline of the tire, thereby helping to avoid tread groove cracks in the centerline of the tire.

An impact energy absorption is determined herein as energy/cord (or, in other words, energy absorption/cord, or particularly, impact energy absorption/cord) with a Charpy Impact Test using a Charpy Impact Tester, with a 1 2.54 cm strip with 10 ends per 2.54 cm (EPI).

In one embodiment, a second layer of the one or more further layers is arranged radially below a first shoulder groove, and a third layer of the one or more further layers is arranged radially below a second shoulder groove, wherein each of the first layer, the second layer, and the third layer are formed by a helically wound ply strip.

Such a construction of the tire having a pair of working belts and an intermediate belt, particularly comprising a layer provided radially below a shoulder groove, has been found to further improve robustness of the tire, particularly including the respective shoulder area(s) of the tread and/or belt portion. In particular, such a multilayer design of the intermediate belt helps to improve durability of the intermediate belt in the respective shoulder area(s) of the tire.

In another embodiment, the first layer, the second layer and the third layer are formed by a single ply strip. The ply strip is preferably a wound ply strip. It can be considered as wound (e.g., spirally/helically wound) about an axial direction of the tire, such as to form at least one layer of the intermediate belt. The strip may be wound at an angle of less than 5° with the circumferential direction of the tire. Preferably, such an angle is between 0.1° and 4°, or more preferably between 0.1° and 2°, or even more preferably between 0.2° and 1°. This angle is preferably the same angle as the angle of the parallel and/or elongated reinforcement elements of the ply strip. The reinforcement elements of the ply strip are preferably coated with a (coating) rubber composition to form the ply strip. In other words, the ply strip comprises reinforcement elements coated with a rubber composition. Similarly, the belts typically comprise reinforcement elements, such as cords, e.g., metal and/or steel cords, which are coated with a rubber composition. Rubber compositions (or, in other words, rubber coating compositions) for belts, or, in other words, belt plies and ply strips are known in the tire art.

In another embodiment, each of the one or more further layers (e.g., a second layer and/or a third layer) extends over an axial width corresponding to 5% to 30% (preferably 5% to 20%) of the (maximum) axial width of the axially largest working belt. Alternatively, or in addition, each of the one or more further layers (e.g., a second layer and/or a third layer) extends over an axial width corresponding to a range of 90% to 300% (preferably, of 100% or 110% to 250%) of the axial width of the (radially outer or outermost) opening of a respective shoulder groove located radially above the respective further layer of the intermediate belt.

In another embodiment, the one or more further layers comprise a second layer arranged radially below a first shoulder groove, and a third layer arranged radially below a second shoulder groove. Preferably, the intermediate belt comprises only these three layers.

In another embodiment, the tread comprises four or five (preferably four) circumferential grooves, including two shoulder grooves, wherein one of the shoulder grooves is located in each axially/laterally outer region of the tread.

In still another embodiment, the axially largest working belt (which is preferably the radially inner working belt) extends over an axial width which is within a range of 110% to 200%, preferably from 115% to 160%, of the axial distance between the axially (and radially) outer edges of the shoulder grooves. An axially (and radially) outer edge of a shoulder groove can also be described as an axially outer edge of a radially outer opening of such a groove.

In another embodiment, each of the first layer, the second layer, and the third layer are formed by at least one ply strip comprising the reinforcement elements. It is possible that each layer is formed by one or more separate ply strips. Optionally, each strip is wound and/or constructed as mentioned herein above.

In another embodiment, the first layer, the second layer and the third layer are formed by the same ply strip. For instance, it is possible that the second layer is helically wound about a radially lower working belt from an axially inner position towards a first axially outer position. From the first axially outer position the strip is wound radially on top of the second layer in an axially inner direction so as to form the first layer, covering at least 70% of the axial width of the axially largest working belt. From a second axially outer (or outermost) position (e.g., on an opposite axial/lateral side of the tire) of the first layer, the axial winding direction of the strip is reversed so as to provide the third layer on top of the first layer. The provision of all three layers by one strip is particularly fast and/or cost efficient. Also, different tire widths and diameters can be built in such a manner, e.g., using only a single strip type.

In another embodiment, one or more of the first layer, the second layer, and the third layer are each formed by at least one separate ply strip.

In still another embodiment, the second layer is located radially below the first layer and the third layer is located radially above the first layer. Such a preferred construction is easy to manufacture in one strip winding step.

In still another embodiment, the second layer and the third layer are one of i) both located radially below the first layer, and ii) both located radially above the first layer. It is also possible that the second layer and the third layer are provided at essentially the same radial height. However, each of the second layer and the third layer preferably forms a circumferential band radially below each shoulder groove or shoulder of the tire. A position radially below each shoulder groove or shoulder of the tire does not exclude that one or more further belts are provided radially above the second and/or third layer and between the second and/or third layer and the shoulder groove.

In still another embodiment, said elongated reinforcement elements are one or more of metal cords and metal wires, preferably metal cords, such as steel cords.

In still another embodiment, the top belt comprises a rubber composition reinforced by cords (e.g., metal, preferably steel, textile, or hybrid cords).

In still another embodiment, the reinforcement cords of the top belt comprise metal cords, preferably steel cords, having a cord construction of 5 x d, with d ranging from 0.3 mm, preferably from 0.34 mm, or from 0.35 mm, to 0.5 mm, such as 5 x 0.35 mm and/or 5 x 0.38 mm. In addition, or alternatively, the reinforcement cords of the top belt comprise metal cords, preferably steel cords, having a lay length within a range of 10 mm to 20 mm, preferably within a range of 12 mm to 16 mm, or even more preferably within a range of 13 mm to 15 mm.

In still another embodiment, the elongated reinforcement elements of the intermediate belt (and/or the working belts) are steel cords. In still another embodiment, the steel cords are one of ultra-tensile steel cords and super-tensile steel cords, preferably ultra-tensile steel cords. Super-tensile steel means a (preferably carbon) steel with a tensile strength of at least 4050 MPa - (2000 MPa/mm x D), wherein D is the filament diameter in mm and x means multiplied by. Ultra-tensile steel means a (preferably carbon) steel with a tensile strength of at least 4400 MPa - (2000 MPa/mm x D), wherein D is again the filament diameter in mm and x means multiplied by.

In still another embodiment, the elongated reinforcement elements of the intermediate belt are steel cords having a cord construction according to a + b x d, wherein a is an integer ranging from 1 to 5 (preferably from 3 to 5), b is an integer ranging from 2 to 7 (preferably from 2 to 4), and d is ranging from 0.2 mm to 0.5 mm.

In still another embodiment, cords of the working belts and/or the intermediate belt are metal cords having a construction a + b x d, wherein a is ranging from 2 to 5 (metal wires/filaments), b is ranging from 2 to 4 (metal wires/filaments) and d (the respective diameter of the metal wires/filaments) is ranging from 0.2 mm to 0.5 mm (preferably from 0.3 mm to 0.45 mm. In particular, such a construction is considered to be open for rubber penetration which further improves robustness of the tire.

In still another embodiment, the elongated reinforcement elements of the intermediate belt are metal (preferably steel) cords, and/or the working belts comprise metal (preferably steel) cords (or reinforcement cords).

In still another embodiment, the metal cords of the intermediate belt and the working belts have the same cord construction.

In still another embodiment, one or more of the metal cords, such as of the intermediate belt and/or the working belts, have an elongation at 10% of their breaking force which is higher than 0.2% or 0.21%, and preferably lower than 0.4%, or 0.35%, or 0.3%, or even lower than 0.29%, measured after extraction from the cured tire. Preferably such values apply to the cords of the working belts and/or the cords of the intermediate belt. Such cord elongation or tensile tests on the cords are carried out herein for cords extracted out of the cured tire according to ISO 6892-1B, with a preload of 20 MPa.

In still another embodiment, the intermediate belt (including its layers) is provided radially between the two working belts of the pair of working belts.

In still another embodiment, the ply strip has an axial width within a range of 1.5 mm to 25 mm (preferably from 3mm to 16 mm, or from 3 mm to 9 mm), and/or a radial thickness within a range of 0.5 mm to 3 mm (preferably from 1 mm to 3 mm). Such radial thickness values may also apply to other belts, or belt plies, mentioned herein, including one or more of the working belts, transition belt(s), if any, and the top belt.

In still another embodiment, the ply strip comprises from 1 (preferably from 2) to 5 parallel reinforcement elements selected from one or more of cords and wires.

In still another embodiment, the ply strip has a density of parallel reinforcement elements ranging from 10 ends per 2.54 cm (EPI) to 20 EPI, e.g., measured perpendicular to an elongated extension of the strip, and/or perpendicular to an elongated extension of the reinforcement elements.

In still another embodiment, the working belts have a density of parallel reinforcement elements ranging from 8 EPI to 15 EPI, preferably from 10 EPI to 14 EPI, measured perpendicular to an elongated extension of the reinforcement elements.

In still another embodiment, said reinforcement elements are one or more of: elongated reinforcement elements; metal reinforcement elements; metal and/or hybrid cords, optionally comprising multiple metal wires/filaments. A preferred metal herein is steel. Metal reinforcement elements or cords may optionally be coated with brass. In a most preferred embodiment, the reinforcement elements are brass-coated steel cords, such as comprising multiple steel wires.

In still another embodiment, each working belt of the pair of working belts comprises parallel (and preferably elongated) reinforcement elements, wherein the reinforcement elements of the first working belt and the reinforcement elements of the second working belt cross each other at an opposing angle, or in other words, with an opposite angular orientation.

In still another embodiment, the absolute value of the angle of the (respective) reinforcement elements (or cords) of each working belt with the circumferential direction of the tire ranges from 10° to 50°, preferably from 15° to 30°, or more preferably from 15° to 25°. Alternatively, or in addition, the difference between i) the absolute value of the angle of the reinforcement elements of the first working belt and ii) the absolute value of the angle of the reinforcement elements of the second working belt, is at least 2° (preferably at least 3° and/or at most 15°, or at most 8°, or only at most 6°). Preferably, the radially innermost working belt has the larger absolute angle. This is for instance preferred to have this angle closer to an angle of an/the at least one carcass ply, which has preferably an angle of 90° with the circumferential direction. Preferably, the belt portion has no transition belt in such an embodiment between the radially innermost working belt and the adjacent carcass ply, which is provided radially below said innermost working belt.

In still another embodiment, each working belt of the pair of working belts comprises parallel (elongated) reinforcement elements, wherein at least one of (but preferably, both of) i) the reinforcement elements of the working belts, and ii) the reinforcement elements of the intermediate belt have a relative elongation at 10% of their/the breaking force which is lower than 0.4 % (preferably lower than 0.3 %, or lower than 0.29 %). Optionally, said elongation is at least 0.2 % or 0.21%.

In still another embodiment, the reinforcement cords of the top belt have an angle within a range of 10° to 25°, preferably 14° to 21°, with the circumferential direction of the tire. In addition, or alternatively, the top belt is axially narrower than each of the working belts and the first layer of the intermediate belt.

In still another embodiment, the belt portion has exactly four belts, i.e., the two working belts, the intermediate belt (with multiple layers, preferably exactly three layers) and the top belt; or, exactly five belts, including said four belts and a transition belt arranged radially below the radially innermost working belt.

In still another embodiment, the top belt has an axial width of at least 50% of the axial width of the axially largest working belt and/or the radially innermost working belt (which is preferably the axially largest working belt). In addition, or alternatively, the axial width of the top belt is within a range of 50% to 90%, or 50% to 85% (preferably 50% to 80%) of the axially largest working belt and/or the radially innermost working belt. In addition, or alternatively, the axial width of the top belt is within a range of 75% to 90%, preferably 80% to 85%, of a (maximum) axial width of the intermediate belt.

In yet another embodiment, the tire further comprises a transition belt arranged radially below the pair of working belts. Optionally, the transition belt comprises parallel reinforcement elements having an angle within a range of 35° to 90° (preferably of 50° to 90°, or more preferably of 50° to 75°) with the circumferential direction of the tire. Preferably, the transition belt is axially narrower than each of the working belts and the first layer of the intermediate belt.

In still another embodiment, the transition belt comprises metal cords, preferably steel cords, having a construction of 3 + 2 x 0.35. In addition, or alternatively, the metal cords of the transition belt are steel cords having a cord construction according to a + b x d, wherein a is ranging from 1 to 5 (preferably from 3 to 5), b is ranging from 2 to 7 (preferably from 2 to 4), and d is ranging from 0.2 mm to 0.5 mm (and wherein a and b are again integers).

In still another embodiment, both working belts have a larger axial width than the intermediate belt.

In still another embodiment, the tire comprises one of i) four belts (i.e., one top belt, two working belts, and one intermediate belt) and ii) five belts (i.e., one top belt, two working belts, one intermediate belt, and a transition belt).

In still another embodiment, the tire further comprises a rubber ply arranged between the radially inner working belt and a radially outermost carcass ply of the tire. Such a rubber ply is preferably devoid of reinforcements. Optionally, it has a radial thickness within a range of 0.5 mm to 3 mm, preferably within a range of 1 mm to 2.5 mm. Preferably, it has a stiffness which is at most the stiffness of the rubber composition of the radially inner working belt. Preferably, such a stiffness of the rubber composition of the rubber ply is at least 5% lower than the stiffness of the rubber composition of the radially inner working belt. Stiffness is determined herein as G'(1%). G'(1%) is obtained herein at 100°C and 1 Hz at 1% strain with an RPA 2000^{™} Rubber Process Analyzer of the company Alpha Technologies, based on ASTM D5289, or equivalent.

In still another embodiment, one or more of the first layer, the second layer, and the third layer (of the intermediate belt), do not axially extend beyond an adjacent axially outer(most) edge of the one or more of the working belts.

In still another embodiment, one or more of the first layer, the second layer, and the third layer, extend axially beyond an adjacent axially outer edge of the top belt. Preferably, one or more of the first layer, the second layer, and the third layer extend less than 10 %, (preferably less than 5%) of the total axial width of the top belt axially beyond an axially outer edge of the top belt.

In still another embodiment, the belt portion has one or more of the following: the first layer of the intermediate belt being axially larger than the top belt; the second working belt being axially larger than the first layer; and the first working belt being axially larger than the second working belt.

In another embodiment, each of the belts extends in an axially outer direction so as to support a shoulder groove on each lateral/axial side of the tire. In other words, each belt (particularly including the top belt) optionally extends to an outer axial position which is axially outside a radially outermost end (or opening) of an axially outer sidewall of a respective shoulder groove.

In still another embodiment, one or more of the top belt, the first working belt, the second working belt, and the intermediate belt extend (preferably continuously, and/or transversely to the radial direction / to an equatorial plane of the tire) from a position radially below a first one of the two shoulder portions to another position radially below a second one of the two shoulder portions. In addition, or alternatively, both axially outer edges of one or more of the belts are essentially symmetric with respect to an equatorial plane of the tire.

In still another embodiment, at least one of the working belts and/or the intermediate belt has a rubber penetration of at least 90%, preferably of at least 95%, or even more preferably of at least 99% or 100%. Full rubber penetration improves the durability of the tire and increases corrosion resistance as well as retreadability. Moreover, such high rubber penetrations provide an even higher durability of the respective belts and help to avoid cord breaking.

The reinforcement cords of belts are typically coated with a rubber composition or compound before assembly of the tire. During cure or vulcanization, the rubber can penetrate the cord. The degree to which the rubber penetrates the free zones of a cord (called rubber penetration) is expressed as a percentage of the free zones occupied by a rubber compound after curing and is determined by an air-permeability test. This test is performed on cords extracted from a belt of a cured tire which has therefore been penetrated with the cured rubber composition. Rubber penetration is measured herein through an air permeability test according to L. Bourgois, Survey of Mechanical Properties of Steel Cord and Related Test Methods, Special Technical Publication 694, ASTM, 1980, or equivalent.

In still another embodiment, the tire is one or more of: a pneumatic tire; a radial tire; one of a 17.5, 19.5, 22.5 and a 24.5 inch tire; a truck tire; a tire having at least one steel reinforced carcass ply; a tire comprising steel reinforced working belts and/or a reinforced intermediate belt formed by a steel reinforced ply strip. Preferably, the tire is a 22.5 inch pneumatic radial truck tire.

In still another embodiment, the second layer and/or the third layer is arranged axially outside a respective shoulder groove of the respective shoulder portion.

In still another embodiment, the tire can be built with a method including one or more of the following steps:
providing at least one carcass ply, e.g., on a tire building drum;
optionally applying a transition belt onto the carcass ply;
applying a first working belt onto the carcass ply and/or the transition belt;
applying an intermediate belt onto the first working belt, preferably including one or more of the following sub-steps a) to c):
   a) winding, in a first winding step, a ply strip about (or around) the first working belt so as to form a circumferential band (or layer) of the intermediate belt extending over an axial portion of the first working belt, radially below a first one of the shoulder portions and/or a first one of the shoulder grooves (wherein said band or layer has preferably an axial width of at most 50% or 30% (and/or at least 5%) of the axial width of the first working belt);
   b) continue winding, in a second winding step, the same ply strip (preferably in a reversed axial orientation than in the first winding step) so as to form another layer of the intermediate belt covering at least 70% (and/or at most 95%) of the width of the first working belt and preferably also said band or layer formed in the first winding step;
   c) continue winding, in a third winding step, the same ply strip (preferably in the same axial orientation as in the first winding step) so as to form a further circumferential band (or layer) of the intermediate belt extending over an axial portion of the intermediate belt and/or said another layer formed in the second winding step, radially below a second shoulder portion and/or a second shoulder groove (on a side of the tire axially opposite to said first one of the shoulder portions and/or grooves), wherein said further band (or layer) has preferably an axial width of at most 50% or 30% (and/or at least 5%) of the axial width of the first working belt;
applying a second working belt onto the intermediate belt;
applying a top belt onto the second working belt, wherein the second working belt and the top belt may optionally be applied together as one member onto the intermediate belt;
applying a tread onto the top belt.

In one embodiment, the first winding step, the second winding step and the third winding step are carried out continuously, e.g., in one pass.

In another embodiment, said winding is helically winding, such as about the axial direction, and/or as described in other passages herein.

It is emphasized that such features of building a tire are not limited to the mentioned steps and that such steps do not exclude further manufacturing or mounting steps of further tire components, e.g., sidewalls, chafers, beads, apexes, overlays, etc. Such steps could also be present between one or more of the above-mentioned steps.

In another embodiment, the tire further comprises one or more of two axially spaced apart bead portions (wherein, e.g., each bead portion comprises one or more of a bead and a bead apex), two sidewalls wherein each of the two sidewalls extends between the tread and a respective one of the bead portions, one or more carcass plies extending from one of the bead portions to another one of the bead portions (wherein, optionally, at least one of the carcass plies is folded around each bead, and/or wherein the belt portion is provided radially outwards or above said one or more carcass plies in a crown region of the tire), and an innerliner at least partially enclosing a tire cavity.

According to the second aspect, the tire comprises a tread and a belt portion located radially below the tread, wherein the tread has two (e.g., axially opposite) shoulder portions, each shoulder portion comprising a (circumferentially extending) shoulder groove, wherein the belt portion comprises a pair of working belts and an intermediate belt. Furthermore, the pair of working belts comprises a first working belt and a second working belt radially above the first working belt, and the intermediate belt is arranged between the first working belt and the second working belt and comprises metal cords having i) an angle of less than 5° (preferably, less than 2° or 1°) with a circumferential direction of the tire and ii) a cord construction according to a + b x d, wherein a is ranging from 1 to 5 (preferably 3 to 5), b is ranging from 2 to 7 (preferably 2 to 4) , and d is ranging from 0.2 mm to 0.5 mm. Moreover, the belt portion further comprises a top belt arranged radially above the second working belt, wherein the top belt comprises cords having an impact energy absorption larger than 7 J/mm², preferably larger than 7.5 J/mm².

It has been found that the combination of providing such intermediate belt cords in combination with said top belt cords provides a very robust belt design. In particular, the cord construction of the intermediate belt provides a high rubber penetration.

In one embodiment, the metal cords of the intermediate belt are ultra-tensile steel cords having a construction selected from one or more of 4 + 3 x 0.35 and 3 + 2 x 0.35, and/or the working belts comprise steel cords. Optionally, the steel cords of the intermediate belt and the steel cords of the working belts have an elongation at 10% of their breaking force which is higher than 0.2% and lower than 0.4%, measured after extraction from the cured tire.

Optionally, narrower elongation ranges may be applied such as those mentioned herein above.

In another embodiment, the intermediate belt comprises at least two layers comprising a first layer and one or more further layers, wherein the first layer of the intermediate belt extends over at least 70% of the axial width of the axially largest working belt, and wherein each layer of the one or more further layers of the intermediate belt is arranged radially below one of the shoulder grooves and extends over at most 50% of the axial width of the axially largest working belt.

In still another embodiment, the first layer and the one or more further layers are formed together by a single, and/or preferably helically wound, ply strip having one or more of an axial width within a range of 1.5 mm to 25 mm, a radial thickness within a range of 0.5 mm to 3 mm, and 1 to 5 parallel, preferably ultra-tensile, steel cords.

According to the third aspect, the tire comprises a tread and a belt portion located radially below the tread, wherein the tread has two (e.g., axially opposite) shoulder portions, each shoulder portion comprising a (circumferentially extending) shoulder groove, wherein the belt portion comprises a pair of working belts and an intermediate belt. Furthermore, the pair of working belts comprises a first working belt and a second working belt provided radially outward the first working belt, and wherein the intermediate belt is arranged between the first working belt and the second working belt and comprises elongated reinforcement elements having an angle of less than 5° (preferably, of less than 2° or 1°) with a circumferential direction of the tire. Still in accordance with the third aspect, the intermediate belt has a rubber penetration of at least 90% (preferably at least 95%, or even 99%) along/over at least 90% of its axial width (or, preferably, its whole axial width). Furthermore, the belt portion comprises a top belt, arranged radially above the second working belt, which comprises cords having an impact energy absorption larger than 7 J/mm², preferably larger than 7.5 J/mm².

The advanced rubber penetration of the intermediate belt cords in combination with the high impact resistance, or, in other words, impact energy absorption of the cords in the top belt, results in a very robust belt portion design, particularly in an axial center portion of the tire. This also helps to avoid cracks in an axial center portion of the tire's tread.

In one embodiment, the elongated reinforcement elements are metal cords having a cord construction according to a + b x d, wherein a is an integer ranging from 1 (preferably from 3) to 5, b is an integer ranging from 2 to 7 (preferably to 4), and d is ranging from 0.2 mm to 0.5 mm.

In another embodiment, the elongated reinforcement elements are steel cords, preferably ultra-tensile steel cords.

In still another embodiment, the ultra-tensile steel cords have a construction selected from one of 4 + 3 x 0.35, and 3 + 2 x 0.35.

In still another embodiment, the top belt has an axial width of 80% to 95% of a maximum axial width of the intermediate belt; and/or the intermediate belt has a maximum axial width of at most 95% of the maximum axial width of the axially narrowest working belt of the pair of working belts; and/or two axially opposite edges of the top belt are essentially symmetric with respect to an equatorial plane of the tire (or, in other words, both of these edges have an essentially equal distance from the equatorial plane of the tire, measured perpendicular to the equatorial plane of the tire).

In still another embodiment, one or more of (preferably each of) the top belt, the first working belt, the second working belt, and the intermediate belt extend (preferably continuously, and/or transversely to the radial direction / to the equatorial plane of the tire) from a position radially below a first one of the two shoulder portions to another position radially below a second one of the two shoulder portions. In addition, or alternatively, both axially outer edges of one or more of the belts are essentially symmetric with respect to the equatorial plane of the tire.

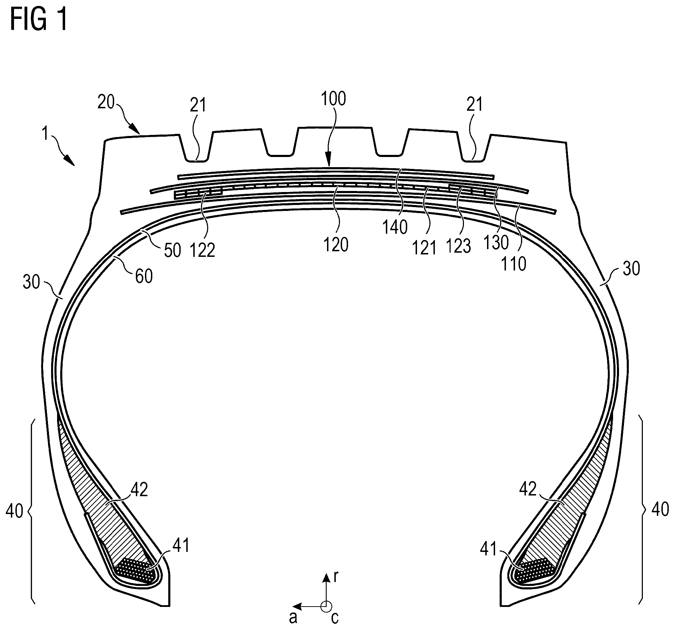

Figure 1 shows a tire 1 in accordance with a preferred embodiment of the present invention. The tire 1 has a tread 20, a pair of sidewalls 30, a pair of bead portions 40, a carcass ply 50, and an innerliner 60. Each bead portion 40 comprises a bead 41 and a bead apex 42. Moreover, the tire 1 has a belt portion 100 comprising multiple belts including a first working belt 110, a second working belt 130, an intermediate belt 120, and a top belt 140. In accordance with the embodiment of Figure 1, the intermediate belt 120 comprises three layers, i.e., a first layer 121, a second layer 122 and a third layer 123. Each of the second layer 122 and third layer 123 are arranged radially below a respective shoulder groove 21 of the tread 20.

Each of the first working belt 110 and the second working belt 130 have parallel and elongated reinforcements or reinforcement elements, in this preferred case metal cords, which have an angle with the circumferential direction c within a range of 10° to 50°. The reinforcement elements of the first working belt 110 preferably cross the reinforcement elements of the second working belt 130 with an opposite angular orientation, wherein the angle of the first working belt 110 with the circumferential direction c is in a preferred embodiment 4° larger than such an angle of the second working belt 130 with the circumferential direction c.

As schematically shown in Figure 1, the intermediate belt comprises at least one ply strip which is wound to form the intermediate belt 120. In particular, the metal cords of the intermediate belt 120, particularly in a ply strip of the intermediate belt 120, have an angle with the circumferential direction c which is smaller than 1° in the present example. The ply strip is helically wound about the axial direction a on top of the circumferential first working belt 110.

In the preferred embodiment shown in Figure 1, the whole intermediate belt 120, comprising three layers, is formed by a single ply strip.

In particular, such a ply strip can be helically wound from an axially inner position to an axially outer end position so as to form the second layer 122. After having reached an axially outer end position of the second layer 122, the ply strip can be wound about the axial direction of the tire 1 but is moved during continued winding in an axially inner direction so as to form the first layer 121 (in Figure 1 from the left-hand side to the right-hand side). After continued winding of the ply strip radially above the first working belt 110, the axially outer movement during winding is stopped and reversed again at an axially outer end position on the right-hand side of the tire 1 and so as to continue moving during winding again in an axially inner direction of the tire 1. By such an axially inner movement, the third layer 123 of the intermediate belt 120 can be formed. Finally, the axially inner movement and the winding can be stopped as soon as the desired width of the third layer 123 has been obtained.

In the present preferred embodiment, each of the second and third layers covers at least the bottom of the respective shoulder groove radially above each of the second and third layers 121, 123. The overall axial width of the intermediate belt 120 is preferably larger than the total axial width of the top belt 140, e.g., at least 1% axially larger and/or at most 10 % axially larger than the axial width of the top belt 140. The width of the first working belt 110 is larger than the width of the second working belt 130, preferably within a range of 5% to 20% larger than the width of the second working belt 130. On the one hand, the total axial width of one of the second layer 122 and the third layer 123 of the intermediate belt 120 is preferably within a range of 10% to 30% of the axial width of the first working belt 110 (which is in this case the axially largest belt of the belt portion 100). On the other hand, the width of the second layer 122 or the third layer 123 of the intermediate belt 120 is preferably within a range of 90% to 250% of the axial width of the radially outermost opening of the respective shoulder groove 21 located radially above the second layer 122 or the third layer 123.

The top belt 140 is preferably the axially narrowest belt of all belts 110, 120, 130, 140 in the present embodiment.

The top belt 140 comprises a plurality of reinforcement cords, here preferably steel cords, having an impact energy absorption (per cord) higher than 7 J/mm², such as 7.8 J/mm² or 8.4 J/mm², as determined herein by using a Charpy Impact Tester with a 2.54 cm strip with 10 end per 2.54 cm, or equivalent. Furthermore, the steel cords of the top belt have preferably a construction of 5 x d, with d being within a range of from 0.3 mm to 0.5 mm, such as 0.35 mm, or preferably 0.38 mm. In a preferred option, cords of the top belt 140 have an impact energy absorption lower than 15 J/mm², such as lower than 12 J/mm² or lower than 10 J/mm².

As shown in the present embodiment, it is preferred to have four belts in total. Moreover, preferably, the tread 20 has four circumferential grooves. In another alternative embodiment it has five of such grooves.

The ply strip, or, in other words, the helically wound ply strip, which forms the layers of the intermediate belt 120, has as such a width within a preferred range of from 3 mm to 25 mm and a preferred thickness within a range of from 0.5 mm to 3 mm. In a preferred embodiment of the invention, the strip has 5 mm width and 2 mm thickness. In another specific embodiment, it has 15 mm width and 2 mm thickness.

The axial direction a, the circumferential direction c and the radial direction r are indicated in Figure 1 for the sake of better comprehensibility. The axial direction a is parallel to the axis of rotation of the tire. The circumferential direction c is parallel to the circumference of the tire and the radial direction r is perpendicular to the axial direction a and the circumferential direction c. It is emphasized that each of these directions can have different orientations so that mentioning one of these directions is not necessarily limited to a specific orientation, unless indicated otherwise herein.

As mentioned above, Figure 1 is a schematic drawing. For instance, the distances between the belts and/or layers shown in Figure 1 are shown larger than in reality. Thus, void spaces between the depicted belt layers and/or belts will typically be closed upon tire curing. The same applies to the further drawings shown herein. The tire 1 of Figure 1 is in the present non-limiting example a pneumatic truck tire 1.

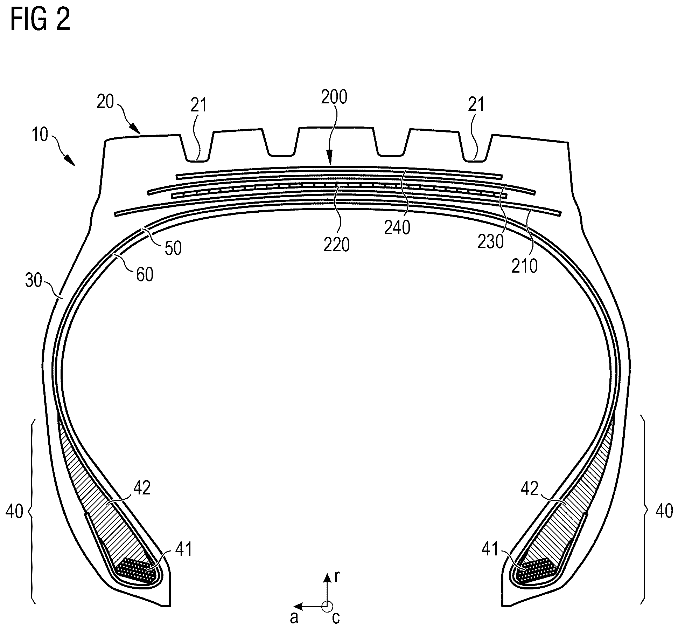

Figure 2 schematically shows another embodiment of a pneumatic truck tire 10 in accordance with the present invention. Figure 2 utilizes, where appropriate, the same reference signs as Figure 1 for various components, including the tread 20, shoulder grooves 21, sidewalls 30, bead portions 40, apexes 42, beads 41, carcass ply 50 and innerliner 60. In contrast to the embodiment of tire 1 shown in Figure 1, the tire 10 according to Figure 2 has a different belt portion 200. This belt portion 200 comprises a first working belt 210, a second working belt 230, a intermediate belt 220, and a top belt 240.

The intermediate belt 220 does not comprise three layers but a single layer formed by a helically wound ply strip. In particular, it does not comprise two further layers arranged radially below each of the shoulder grooves 21. However, the intermediate belt 220 extends also below each shoulder groove 21. In addition, the working belts 210, 230 each comprise parallel metal cords which have an angle with the circumferential direction. The intermediate belt 220 comprises metal cords, particularly ultra tensile steel cords, having i) an angle of less than 5° with a circumferential direction of the tire and ii) a cord construction of 4 + 3 x 0.35 mm.

Similar to the previous embodiment, the top belt 240 is preferably the axially narrowest belt of the belts 210, 220, 230, 240, in the present embodiment of Figure 2. Furthermore, the top belt 240 comprises a plurality of reinforcement cords, preferably steel cords, having again a relatively high impact energy absorption (per cord), which is preferably higher than 7.5 J/mm². Furthermore, the steel cords of the top belt 240 have a construction of 5 x 0.38 (mm). A lay length of these cords is preferably 14 mm in the present embodiment.

In the present preferred embodiment, an absolute value of the angle of parallel cords of the first working belt 210 is 4° larger than the absolute value of the (opposite) angle of the parallel cords of the second working belt 230. In particular, the cords of the first working belt 210 have an absolute angle of 23° and the cords of the second working belt 230 have an absolute angle of 19°. It has been found that the combination of such a pair of working belts 210, 230 and an intermediate belt provided radially between both working belts 210, 230 results in an even more robust construction, further improving the robustness of the working belts. However, such a feature is not mandatory.

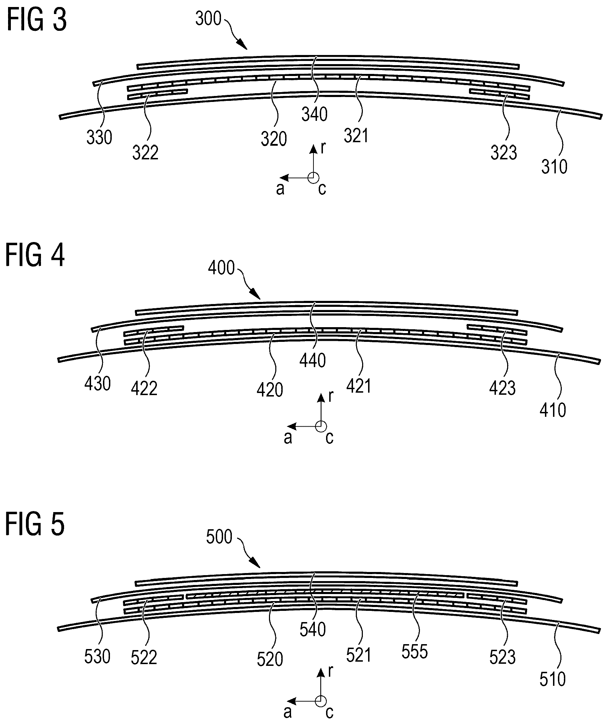

Figure 3 shows an alternative belt portion 300 which could be used in a tire, such as in one of the tires 1 or 10 mentioned above. The belt portion 300 comprises a radially inner working belt 310, a radially outer working belt 330, an intermediate belt 320 provided between the first working belt 310 and the second working belt 330, and a top belt 340 preferably having the same steel cords as in the previously mentioned embodiment. The intermediate belt 320 comprises a first layer 321, a second layer 322 and a third layer 323. In this embodiment, each layer is formed by a separate ply strip. The remaining construction can be the same or similar as described in relation to the embodiment of Figure 2. The embodiment of Figure 3 additionally provides second and third intermediate belt layers below radially upper shoulder grooves (not explicitly shown herein).

Figure 4 shows yet another embodiment of a belt portion 400 which comprises a first working belt 410, a second working belt 430, an intermediate belt 420 and a top belt 440 preferably having the same steel cords as in previous embodiments. The intermediate belt 420 comprises a first layer 421, a second layer 422, and a third layer 423, wherein each of said layers 421, 422, 423 is formed by a separate ply strip. In contrast to the embodiment shown in Figure 3, the third and second layers 422, 423 are provided radially above the first layer 421, whereas similar layers have been provided radially below the respective first layer 321 in the embodiment of Figure 3.

Figure 5 shows still another embodiment of a possible belt portion 500 which comprises belts similar to those of the embodiment of Figure 4. In particular, the belt portion 500 comprises a first working belt 510, a second working belt 530, an intermediate belt 520 and a top belt 540 which comprises again steel cords with relatively high impact energy absorption as mentioned herein above. The intermediate belt 520 comprises a first layer 521 and two radially outer layers 522 and 523, which are arranged radially on top of the first layer 521, as well as radially below respective shoulder grooves (not explicitly shown herein). In addition to the construction shown in Figure 4, the belt portion 500 of Figure 5 has a filler layer 555 consisting of a helically wound rubber strip which is not reinforced, in particular devoid of fabric or metal cords and/or wires. It can be used in case of relatively thick layers of the intermediate belt, such as the second and/or third layers 522 and 523. However, such a provision is not essential as typically the various belts of the tire are attached to each other during tire cure.

In each of the limiting embodiments shown in the Figures herein, the intermediate belts preferably have elongated reinforcement elements in the form of metal cords, in particular steel cords, which are preferably brass coated. In one preferred example, they have the following cord construction: 4 + 3 x 0.35 mm. In this example, four inner filaments (or wires) are straight and three filaments are twisted over the four inner filaments which provides a relatively open construction which allows for example a good rubber (coating) penetration.

Preferably, working belts have the same or similar cords as the intermediate belt. For instance, those may have the following cord constructions: preferably 4 + 3 x 0.35 mm and/or 3 + 2 x 0.35 mm.

An ends per 2.54 cm (EPI) range of cords in the working belts is preferably ranging from 8 EPI to 14 EPI. An ends per 2.54 cm range in the intermediate belt ply strips is preferably within a range of 10 EPI to 20 EPI, preferably of 10 EPI to 16 EPI, or more preferably of 14 EPI to 16 EPI. Preferably, an EPI range of the cords in the top belt ranges from 8 EPI to 14 EPI, and/or is less than 10 EPI.

Preferably, the cords utilized herein for the working belts and/or the intermediate belts have an elongation (or relative elongation) at 10% of their breaking force which is larger than 0.2%, and preferably smaller than 0.4%.

In relation to the inventive example of a belt portion 100 shown in Figure 1, the inventors have carried out a finite element analysis (FEA) comparing a tire having only the first layer of the intermediate belt (not shown) and the tire shown in Figure 1 having a third layer radially below the respective shoulder groove. This analysis concludes that the maximum force in the intermediate belt is reduced by 25% by the addition of the third layer 123, which is a significant improvement, and helps to improve tire durability.

Moreover, the inventors have tested the rubber penetration in the belts, and their layers used in the embodiments herein. The test results show a 100% rubber penetration in the intermediate belt, including all of its layers and across the whole axial width. The same applies to each of the working layers. Such a very high rubber penetration makes the tire more robust.

Overall, the present invention, and optionally one or more of its embodiments, helps to provide robust tires, particularly having an advanced belt portion. For instance, stability of the shoulder portions and/or respective groove areas can be improved. Surprisingly, the same applies to an axial center of the belt portion and/or the above provided tread. Moreover, simple and/or cost-effective manufacturing is possible. In particular, an increased absorption of energy and/or forces by the top belt leads to a reduced energy and/or force transfer to the working belts and the intermediate belt. Thus, the durability of the tire may be improved, along with better retreadability. Moreover, such an improved impact energy absorption also helps in eliminating tread groove cracks due to impacts from the road, such as in a centerline region of the tire, as impact energy is transferred to the top belt and absorbed.

It is emphasized that the aspects, embodiments, or features of those may be combined with one another. Embodiments and/or features of one aspect can also be embodiments and/or features of another aspect.

While the present disclosure refers to an intermediate belt (e.g., described as being arranged between the first working belt and the second working belt and having elongated reinforcement elements having an angle of less than 5° with a circumferential direction of the tire), in an alternative wording, the intermediate belt can optionally be mentioned as low angle belt herein.

## Claims

1. A tire comprising a tread (20) and a belt portion (100) located radially below the tread (20), wherein the tread (20) has two shoulder portions, each shoulder portion comprising a shoulder groove (21), wherein the belt portion (100) comprises a pair of working belts (110, 130) and an intermediate belt (120), wherein the pair of working belts comprises a first working belt (110) and a second working belt (130) arranged radially above the first working belt (130), wherein the intermediate belt (120) is arranged between the first working belt (110) and the second working belt (130) and has elongated reinforcement elements making an angle of less than 5° with a circumferential direction of the tire (1), and wherein the intermediate belt (120) comprises a first layer (121) and one or more further layers (122, 123), wherein the first layer (121) of the intermediate belt (120) extends over at least 70% of the axial width of an axially largest working belt (110, 130) of the pair of working belts, and wherein each layer of the one or more further layers (122, 123) of the intermediate belt (120) is arranged radially below one of the shoulder grooves (21) and extends over at most 50%, alternatively at most 30%, of the axial width of the axially largest working belt (110, 130), and wherein the belt portion (100) further comprises a top belt (140) arranged radially above the second working belt (130), wherein the top belt (140) comprises reinforcement cords having an impact energy absorption higher than 7 J/mm².

2. The tire according to claim 1, wherein a second layer (122) of the one or more further layers (122, 123) is arranged radially below a first shoulder groove (21) and wherein a third layer (123) of the one or more further layers is arranged radially below a second shoulder groove; and/or wherein each of the first layer (121), the second layer (122), and the third layer (123) is formed by a helically wound ply strip, preferably by a single ply strip.

3. The tire according to claim 1 or 2, wherein the second layer (122) is located radially below the first layer (121) and the third layer (123) is located radially above the first layer (121).

4. The tire according to claim 1 or 2, wherein the second layer (122) and the third layer (123) are one of: both located radially below the first layer (121) and both located radially above the first layer (121).

5. The tire according to at least one of the previous claims, wherein said elongated reinforcement elements are one or more of metal cords and metal wires; and/or wherein the elongated reinforcement elements are ultra-tensile steel cords.

6. The tire according to at least one of the previous claims, wherein the reinforcement cords of the top belt (140) comprise steel cords preferably having a cord construction of 5 x d, with d preferably being within a range of from 0.3 mm to 0.5 mm.

7. The tire according to at least one of the previous claims, wherein the elongated reinforcement elements of the intermediate belt (120) are cords, preferably steel cords, having a cord construction according to a + b x d, wherein a is ranging from 1 to 5, b is ranging from 2 to 7, and d is ranging from 0.2 mm to 0.5 mm.

8. The tire according to at least one of the previous claims, wherein the elongated reinforcement elements of the intermediate belt (120) are metal cords, wherein the working belts (110, 130) comprise metal cords, and wherein at least one of the metal cords of the intermediate belt (120) and the metal cords of the working belts(110, 130) have an elongation at 10% of their breaking force which is higher than 0.2% and lower than 0.4%, measured after extraction from the cured tire.

9. A tire comprising a tread (20) and a belt portion (100) located radially below the tread (20), wherein the tread (20) has two shoulder portions, each shoulder portion comprising a shoulder groove (21), wherein the belt portion (100) comprises a pair of working belts (110, 130) and an intermediate belt (120), wherein the pair of working belts comprises a first working belt (110) and a second working belt (130) radially above the first working belt (110), wherein the intermediate belt (120) is arranged between the first working belt (110) and the second working belt (130) and comprises metal cords having i) an angle of less than 5° with a circumferential direction of the tire (1) and ii) a cord construction according to a + b x d, wherein a is ranging from 1 to 5, b is ranging from 2 to 7, and d is ranging from 0.2 mm to 0.5 mm, and wherein the belt portion (100) further comprises a top belt (140) arranged radially above the second working belt (130), wherein the top belt (140) comprises cords having an impact energy absorption larger than 7 J/mm².

10. The tire according to claim 9, wherein the metal cords of the intermediate belt (120) are ultra-tensile steel cords and/or have a construction selected from one or more of 4 + 3 x 0.35 and 3 + 2 x 0.35, wherein the working belts (110, 130) comprise steel cords, and wherein the steel cords of the intermediate belt (120) and the steel cords of the working belts (110, 130) have an elongation at 10% of their breaking force which is higher than 0.2% and lower than 0.4%, measured after extraction from the cured tire.

11. The tire according to claim 9 or 10, wherein the intermediate belt (120) comprises at least two layers (121, 122, 123) comprising a first layer (121) and one or more further layers (122, 123), wherein the first layer (121) of the intermediate belt extends over at least 70% of the axial width of the axially largest working belt (110, 130), and wherein each layer of the one or more further layers (122, 123) of the intermediate belt (120) is arranged radially below one of the shoulder grooves (21) and extends over at most 50%, alternatively at most 30%, of the axial width of the axially largest working belt (110, 130).

12. The tire according to at least one of the claims 9 to 11, wherein the first layer (121) and the one or more further layers (122, 123) are formed together by a helically wound ply strip, preferably a single helically wound ply strip, having a width within a range of 1.5 mm to 25 mm, a radial thickness within a range of 0.5 mm to 3 mm, and comprising 1 to 5 parallel steel cords, preferably ultra-tensile steel cords.

13. A tire comprising a tread (20) and a belt portion (100) located radially below the tread (20), wherein the tread (20) has two shoulder portions, each shoulder portion comprising a shoulder groove (21), wherein the belt portion (100) comprises a pair of working belts (110, 130) and an intermediate belt (120), wherein the pair of working belts (110, 130) comprises a first working belt (110) and a second working belt (130) radially above the first working belt (110), wherein the intermediate belt (120) is arranged between the first working belt (110) and the second working belt (130) and comprises elongated reinforcement elements having an angle of less than 5° with a circumferential direction of the tire (1), wherein the intermediate belt (120) has a rubber penetration of at least 90% along at least 90% of its axial width, and wherein the belt portion (100) further comprises a top belt (140) arranged radially above the second working belt (130), the top belt (140) comprising cords having an impact energy absorption larger than 7 J/mm².

14. The tire according to claim 13, wherein the elongated reinforcement elements are:
(i) metal cords, steel cords or ultra-tensile steel cords; and/or
(ii) cords having a cord construction according to a + b x d, wherein a is ranging from 3 to 5, b is ranging from 2 to 4, and d is ranging from 0.2 mm to 0.5 mm; and/or
(iii) cords have a construction selected from one of 4 + 3 x 0.35 mm and 3 + 2 x 0.35 mm.

15. The tire according to at least one of the previous claims, wherein the top belt (140) has an axial width in a range of from 80% to 95% of a maximum axial width of the intermediate belt (120); and/or wherein the intermediate belt (120) has a maximum axial width of at most 95% of the maximum axial width of an axially narrowest working belt (110, 130) of the pair of working belts.
